# EUROPEAN PATENT APPLICATION

(11) **EP 4 751 883 A1**
(43) Date of publication of application: **03.06.2026**
(21) Application number: 24858076.3
(22) Date of filing: 09.07.2024
(51) Int. Cl.: B29C 64/209, B29C 64/227, B29C 64/245, B33Y 30/00, B65G 23/44

(54) **SYNCHRONOUS BELT TENSIONING APPARATUS FOR 3D PRINTER, 3D PRINTER, AND 3D PRINTING SYSTEM**

(30) Priority: 28.08.2023 CN 202322328131 U
(71) Applicant: Shenzhen Tuozhu Technology Co., Ltd., Shenzhen, Guangdong 518000 (CN)
(72) Inventor: DONG, Qun, Shenzhen, Guangdong 518000 (CN)
(74) Representative: Grünecker Patent- und Rechtsanwälte PartG mbB
(86) International application number: PCT/CN2024/104541
(87) International publication number: WO 2025/044532

(57) **Abstract**

The present application provides a timing belt tensioner for a 3D printer, a 3D printer, and a 3D printing system. Compared with the method in which a synchronous belt is tensioned by means of a tensioning pulley, the method in embodiments of the present application can reduce the space required for tensioning the synchronous belt, and achieves good compactness.

## Description

The present application claims priority to Chinese Patent Application No. 202322328131.X, filed with the China National Intellectual Property Administration on August 28, 2023 and entitled "TIMING BELT TENSIONER FOR 3D PRINTER, 3D PRINTER, AND 3D PRINTING SYSTEM", which is incorporated herein by reference in its entirety.

### TECHNICAL FIELD

The present application relates to the technical field of 3D printing, and in particular, to a timing belt tensioner for a 3D printer, a 3D printer, and a 3D printing system.

### BACKGROUND

In the process of 3D printing, it is required that a motor drag a sliding block by a timing belt to realize printing in all directions. Due to its flexibility, the timing belt may become loose when used for a period of time, which may further affect the movement of the sliding block.

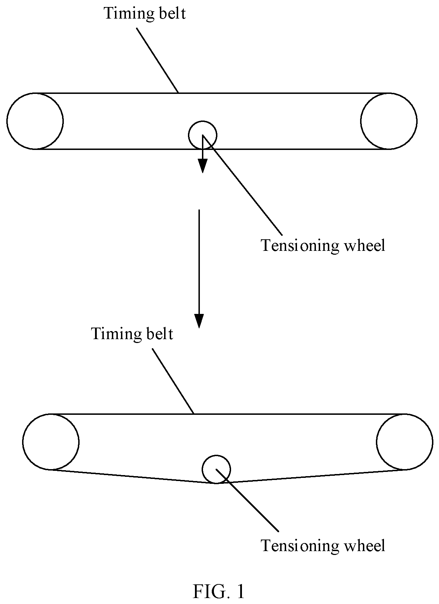

In order to solve the problem of the slack of the timing belt, the timing belt may be tensioned by mounting a tensioning wheel. As shown in FIG. 1, the timing belt may be tightened by adjusting the position of the tensioning wheel.

Although this method can realize timing belt tensioning, it is necessary to reserve a certain space for the tensioning wheel, which will increase the space occupied by timing belt tensioning.

### SUMMARY

The present application provides a timing belt tensioner for a 3D printer, a 3D printer, and a 3D printing system, which can reduce the occupied space required for timing belt tensioning and has good compactness.

In a first aspect, an embodiment of the present application provides a timing belt tensioner for a 3D printer. The 3D printer comprises a support and the support is provided with a first accommodating groove and a second accommodating groove.

The first accommodating groove is separated from the second accommodating groove, and the first accommodating groove fixes one end of a timing belt.

The timing belt tensioner comprises:
a tensioning block located in the second accommodating groove and fixedly connected to the other end of the timing belt, the tensioning block being provided with a fixing hole;
an adjusting hole located on the support and provided corresponding to the fixing hole of the tensioning block; and
a fixing member connected to the fixing hole of the tensioning block within an adjustment range of the adjusting hole, so as to fixedly connect the tensioning block to the support.

In the embodiment of the present application, the support is provided with two separate accommodating grooves: the first accommodating groove and the second accommodating groove. One end of the timing belt is fixed in the first accommodating groove, and the other end of the timing belt is fixed on the tensioning block located in the second accommodating groove. The timing belt tensioning is realized by changing a position of the tensioning block relative to the support. By implementing the embodiment of the present application, the space of the support can be used to complete the timing belt tensioning. Compared with tensioning the timing belt by a tensioning wheel, in the present application, the occupied space required for timing belt tensioning can be reduced, and the compactness is good.

Based on the first aspect, in a first possible implementation, the support includes a timing belt fixing member, and the timing belt fixing member is provided with the first accommodating groove; the timing belt tensioner further includes a first timing belt mounting block; and
fixing, by the first accommodating groove, one end of the timing belt includes:
press-fitting one end of the timing belt to the first timing belt mounting block, and accommodating the first timing belt mounting block in the first accommodating groove.

In the embodiment of the present application, one end of the timing belt can be firmly fixed in the first accommodating groove by the first timing belt mounting block; moreover, when the end needs to be operated, the timing belt can be removed by taking out the first timing belt mounting block. This timing belt fixing method is low in cost.

Based on the first possible implementation of the first aspect, in a second possible implementation, the timing belt is wound around a drive wheel of the 3D printer, and the timing belt fixing member is fixed on a side of the support facing the drive wheel. Based on the first aspect or based on any one of the foregoing possible implementations of the first aspect, in a third possible implementation, the timing belt tensioner further includes a second timing belt mounting block penetrating a slot provided in the tensioning block; and
fixedly connecting the tensioning block to the other end of the timing belt includes: enabling the other end of the timing belt to penetrate the tensioning block via the slot, and accommodating the second timing belt mounting block in the slot.

In the embodiment of the present application, the other end of the timing belt can be fixedly connected to the tensioning block by the slot in the tensioning block and the second timing belt mounting block. In this case, the timing belt tensioning can be realized by adjusting the position of the tensioning block.

Based on the first aspect or based on any one of the foregoing possible implementations of the first aspect, in a fourth possible implementation, the tensioning block is provided with a hole along a movement direction of the timing belt; and
the timing belt tensioner further includes:
an elastic member, where one end of the elastic member is accommodated in a hole of the tensioning block; and
a tensioning block cover plate, where the tensioning block cover plate is disposed on a side of the support that is away from the first accommodating groove, the tensioning block cover plate is connected to the other end of the elastic member, and the tensioning block cover plate is provided with a fixing connector that is fixedly connected to the support.

In the embodiment of the present application, the position of the tensioning block is adjusted by the elastic member. Compared with directly manually adjusting the position of the tensioning block, more accurate adjustment can be achieved, and applying excessive tension to the timing belt can also be avoided.

Based on the fourth possible implementation of the first aspect, in a fifth possible implementation, the timing belt tensioner further includes:
a guide member, where one end of the guide member protrudes from the tensioning block cover plate, and the other end of the guide member passes through an axis of the elastic member and abuts against a side of the tensioning block that is away from the tensioning block cover plate.

In the embodiment of the present application, the guide member can guide the direction of the elastic member, so that the elastic force of the elastic member can be more accurately applied to the tensioning block, and the elastic member can be prevented from popping out.

Based on the first aspect or based on any one of the foregoing possible implementations of the first aspect, in a sixth possible implementation, the adjusting hole is a waist-shaped hole.

Based on the first aspect or based on any one of the foregoing possible implementations of the first aspect, in a seventh possible implementation, the support is connected to a print head of the 3D printer.

In the embodiment of the present application, the timing belt corresponding to the print head can be tensioned with a smaller space occupation.

Based on the first aspect or based on the first to sixth possible implementations of the first aspect, in an eighth possible implementation, the support is connected to a heatbed of the 3D printer.

In the embodiment of the present application, the timing belt corresponding to the print head can be tensioned with a smaller space occupation.

In a second aspect, an embodiment of the present application further provides a 3D printer. The 3D printer comprising: a timing belt and the timing belt tensioner as described in the first aspect or in any one of the foregoing possible implementations of the first aspect.

In a third aspect, an embodiment of the present application further provides a 3D printer system. The 3D printing system comprising: a 3D printer and the 3D printer as described in any one of the above possible implementations of the second aspect. The feeding device is connected to the 3D printer.

It should be understood that for implementation and beneficial effects of the foregoing aspects of the present application, reference may be made to each other.

### BRIEF DESCRIPTION OF THE DRAWINGS

FIG. 1 is a schematic diagram of a tensioning wheel of a 3D printer system in the related art;
FIG. 2 is a schematic diagram of a scenario of a 3D printing system according to an embodiment of the present application;
FIG. 3a is a schematic diagram of the structure of a timing belt tensioner according to an embodiment of the present application;
FIG. 3b is another schematic diagram of the structure of a timing belt tensioner according to an embodiment of the present application;
FIG. 3c is another schematic diagram of the structure of a timing belt tensioner according to an embodiment of the present application;
FIG. 4 is a partial enlarged view of a position A in FIG. 3c;
FIG. 5 is another schematic diagram of the structure of a timing belt tensioner according to an embodiment of the present application;
FIG. 6a is a cross-sectional view in which the timing belt does not penetrate through the B-B part in FIG. 4;
FIG. 6b is a cross-sectional view in which the timing belt penetrates through the B-B part in FIG. 4;
FIG. 7a is a partial enlarged view of a position C in FIG. 3b;
FIG. 7b is a schematic diagram of the structure of FIG. 7a from another angle;
FIG. 8 is another schematic diagram of the structure of a timing belt tensioner according to an embodiment of the present application;
FIG. 9 is a cross-sectional view of the D-D part in FIG. 8.

### DETAILED DESCRIPTION

Implementations of the technical solutions of the present application are further described in detail below with reference to the accompanying drawings.

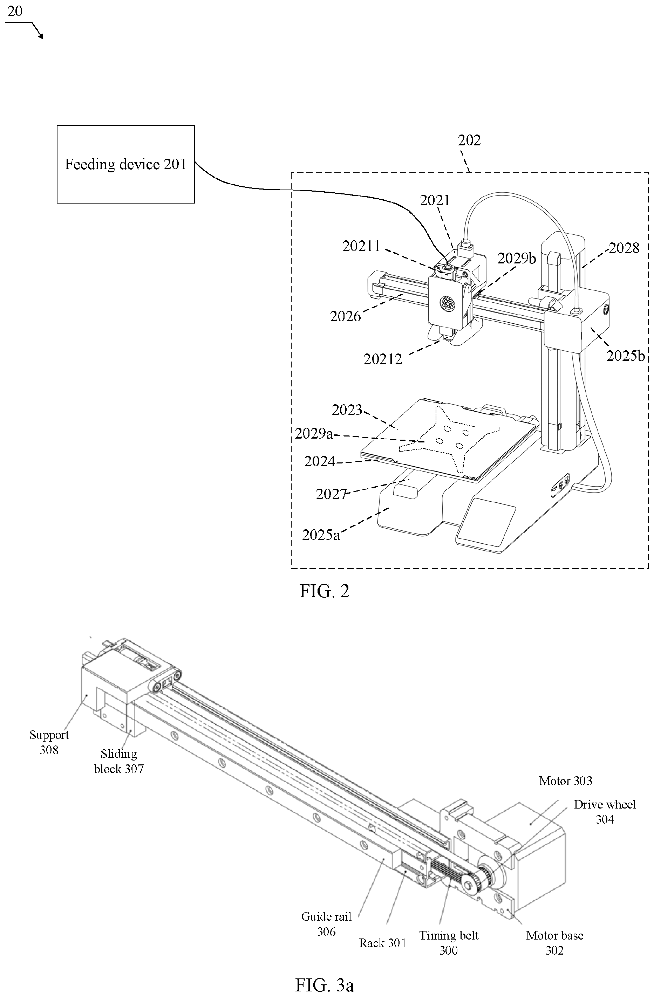

Refer to FIG. 2. FIG. 2 is a schematic diagram of a scenario of a 3D printing system according to an embodiment of the present application. As shown in FIG. 2, the 3D printing system 20 includes a feeding device 201 and a 3D printer 202 connected to the feeding device 201.

The feeding device 201 may hang a filament spool, and a printing material is wound around the filament spool. The feeding device 201 may provide the printing material to the 3D printer 202. Alternatively, the printing material may be rewound to the filament spool through the feeding device 201. That is, the feeding device 201 can feed or retract materials.

The 3D printer 202 includes a print head 2021. The print head 2021 includes a filament guide unit 20211, a nozzle 20212, and an extrusion assembly disposed between the filament guide unit 20211 and the nozzle 20212. During the feeding process of the feeding device 201, the printing material passes through the filament guide unit 20211 and enters the extrusion assembly, and the extrusion assembly provides the printing material to the nozzle 20212. During the retracting process of the feeding device 201, the 3D printer 202 cuts off the printing material in the print head 2021, and the extrusion assembly conveys the printing material to the feeding device 201.

Optionally, the 3D printer 202 may, for example, cut off the printing material between the extrusion assembly and the nozzle 20212, or cut off the printing material in the extrusion assembly, etc., and the position where the 3D printer cuts off the printing material is not limited in the present application.

Exemplarily, the 3D printer 202 further includes a build plate 2023, a heatbed 2024, a base 2025a, and a sliding block 2029a. The heatbed 2024 is disposed on a side of the base 2025a facing the nozzle 20212, and the heatbed 2024 has a heating function. The build plate 2023 is disposed on a side of the heatbed 2024 facing the nozzle 20212, the heat of the heatbed 2024 can be conducted to the build plate 2023, and the nozzle 20212 can extrude the printing material in a molten state onto the build plate 2023. Optionally, the 3D printer 202 further includes a base 2025b and a sliding block 2029b.

In a specific implementation, the 3D printer may adjust the temperatures of the nozzle 20212 and the heatbed 2024. It adjusts the temperature of the nozzle 20212 so as to heat the printing material to a molten state. It adjusts the temperature of the heatbed 2024 so as to adhere the printing material extruded from the nozzle 20212 to the build plate 2023. The print head 2021 is slidably connected to the first guide rail 2026, and drive wheel(s) driven by the motor drags the print head 2021 by the timing belt to move along the length direction of the first guide rail 2026, that is, to realize the change in position of the print head 2021 relative to the build plate 2023 along the length direction of the first guide rail 2026. The heatbed 2024 is slidably connected to the second guide rail 2027, and drive wheel(s) driven by the motor drives the heatbed 2024 by the timing belt to move along the length direction of the second guide rail 2027, that is, to realize the change in position of the print head 2021 relative to the build plate 2023 along the length direction of the second guide rail 2027. The length direction of the second guide rail 2027 is perpendicular to the length direction of the first guide rail 2026. Moreover, the first guide rail 2026 is slidably connected to the third guide rail 2028, and by moving the first guide rail 2026 along the third guide rail 2028, the 3D printer 202 can realize the change in position of the print head 2021 relative to the build plate 2023 along the direction perpendicular to the length of the second guide rail 2027 and along the direction perpendicular to the length of the first guide rail 2026. That is, the 3D printer 202 can realize three printing paths in directions perpendicular to each other, and print a three-dimensional object. In the present application, the timing belt is provided with a timing belt tensioner. The timing belt tensioner is provided with a tensioning block on a support that is used to fix a sliding block, and applies tension to the timing belt by adjusting the position of the tensioning block. Compared with tensioning the timing belt by the tensioning wheel, in the embodiment of the present application, the occupied space required for timing belt tensioning can be reduced, and the compactness is good.

The structure of the timing belt tensioner will be described in detail below with reference to FIG. 3a to FIG. 9.

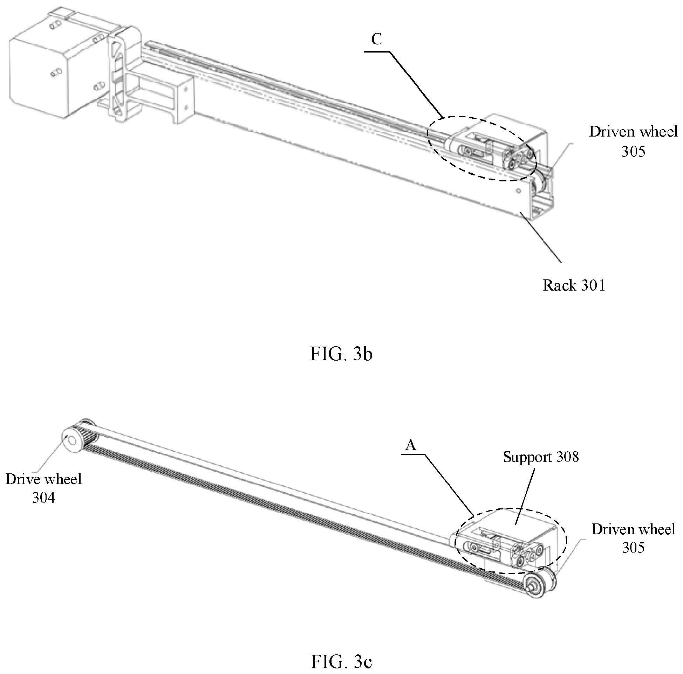

Please refer to FIG. 3a to FIG. 3c. FIG. 3a is a schematic diagram of the structure of a timing belt tensioner according to an embodiment of the present application, FIG. 3b is another schematic diagram of the structure of a timing belt tensioner according to an embodiment of the present application, and FIG. 3c is a schematic diagram of the structure of a timing belt tensioner according to an embodiment of the present application.

The timing belt 300 is wound around a drive wheel 304 and a driven wheel 305. The drive wheel 304 is connected to a motor shaft of a motor 303. Exemplarily, the motor 303 is mounted on a motor base 302, and the motor base 302 is mounted on a rack 301. Specifically, the motor 303 may be configured to drive the drive wheel 304 to rotate. When the drive wheel 304 rotates, the timing belt 300 moves and thus drives the driven wheel 305 to rotate.

The rack 301 may be further provided with a guide rail 306 disposed in parallel with the timing belt 300. A sliding block 307 is disposed on the guide rail 306, and the sliding block 307 is also connected to the timing belt 300. When the timing belt 300 moves, the timing belt 300 may drive the sliding block 307 to move along the guide rail 306. The sliding block 307 is further fixedly connected to a support 308, and the support 308 is provided with a first accommodating groove and a second accommodating groove. The first accommodating groove is separated from the second accommodating groove.

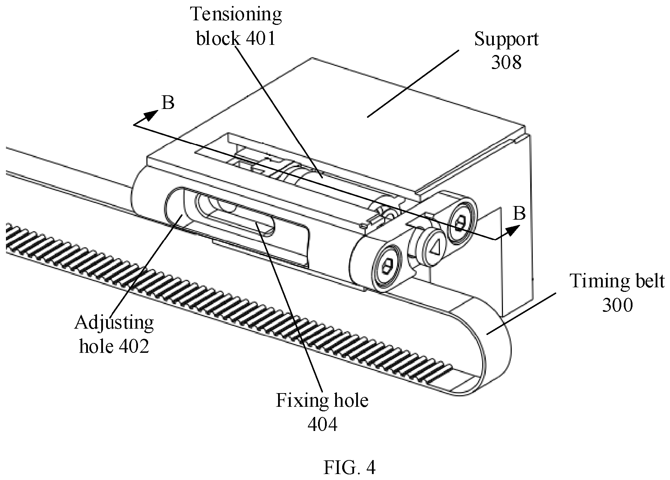

Please refer to FIG. 4. FIG. 4 is a partial enlarged view of a position A in FIG. 3c. As shown in FIG. 4, a tensioning block 401 is disposed in the second accommodating groove of the support 308, and the tensioning block 401 is provided with a fixing hole 404. Exemplarily, the second accommodating groove may be on a side of the support 308 that is close to the driven wheel 305.

Exemplarily, the fixing hole 404 may be specifically implemented as a screw hole. The support 308 is further provided with an adjusting hole 402, and the adjusting hole 402 is provided corresponding to the fixing hole 404 of the tensioning block 401.

In this case, the fixing member is connected to the fixing hole 404 of the tensioning block 401 within an adjustment range of the adjusting hole 402, so as to fixedly connect the tensioning block 401 to the support 308. Exemplarily, the fixing member may be a screw, or may alternatively be a fixed shaft. Exemplarily, the adjusting hole on the support 308 may be referred to as a fixing hole, and the fixing hole on the tensioning block 401 may be referred to as an adjusting hole. Optionally, the fixing hole may be provided on the tensioning block or the support.

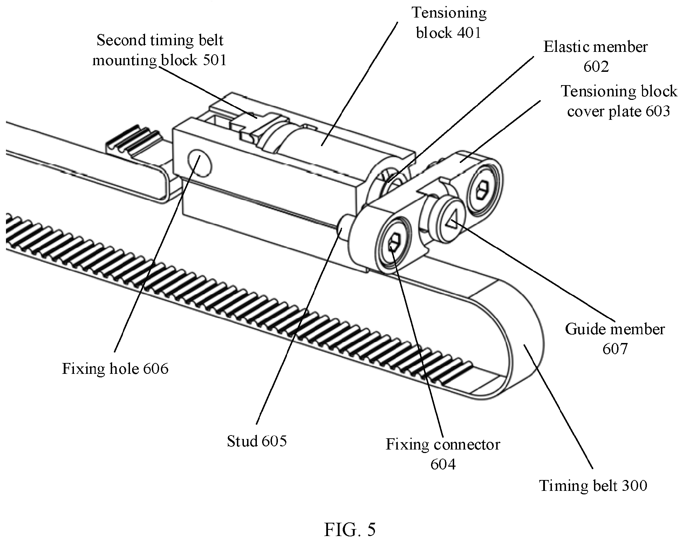

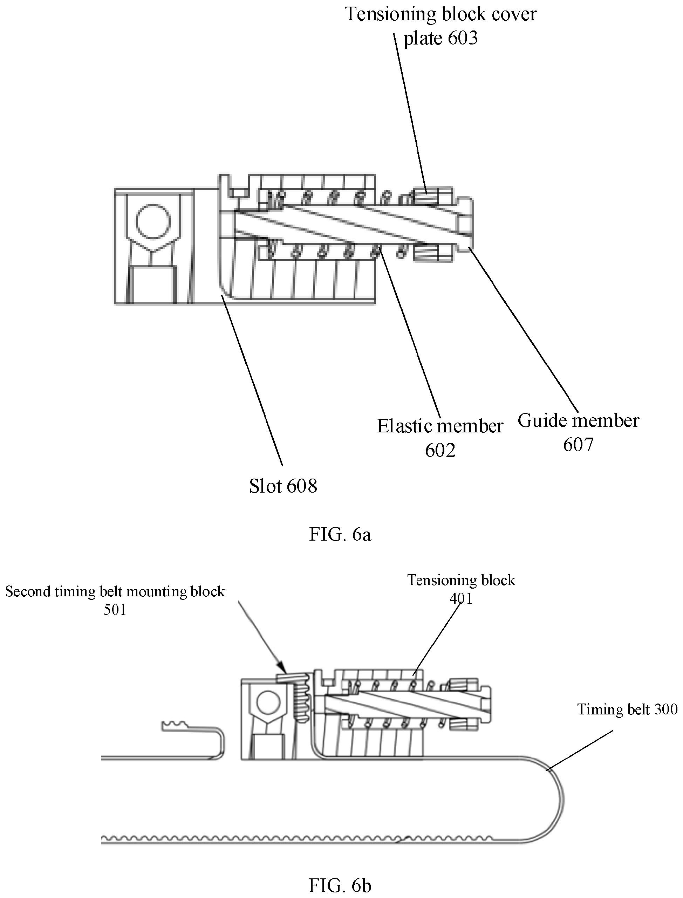

Optionally, please refer to FIG. 5 to FIG. 6b. FIG. 5 is another schematic diagram of the structure of a timing belt tensioner according to an embodiment of the present application, FIG. 6a is a cross-sectional view in which the timing belt does not penetrate through the B-B part in FIG. 4, and FIG. 6b is a cross-sectional view in which the timing belt penetrates through the B-B part in FIG. 4.

As shown in FIG. 5, the timing belt tensioner may further include a second timing belt mounting block 501 disposed in the second accommodating groove. The second timing belt mounting block 501 may be configured to fix the other end of the timing belt 300 to the tensioning block 401.

During specific implementation, as shown in FIG. 6a, a slot 608 that penetrates the tensioning block 401 may be provided in the tensioning block 401.

The other end of the timing belt 300 may pass through the tensioning block 401 via the slot 608. In this case, the cross-sectional view of the timing belt tensioner is changed from FIG. 6a to FIG. 6b.

The second timing belt mounting block 501 is accommodated in the slot. The slot is filled by the second timing belt mounting block 501, so that the other end of the timing belt 300 can be fixedly connected to the tensioning block 401. Exemplarily, the thickness of the second timing belt mounting block may be consistent with, or may alternatively be set to be less than the diameter of the opening of the slot, but the sum of the thickness of the second timing belt mounting block and the thickness of the timing belt is greater than the diameter of the opening of the slot, so as to ensure that the timing belt can be stably fixed in the slot. By implementing the embodiment of the present application, when the end of the timing belt needs to be adjusted, the second timing belt mounting block may be taken out so as to separate the timing belt from the tensioning block, thereby improving structural flexibility.

Optionally, the other end of the timing belt may alternatively be adhered to the tensioning block, so as to realize a fixed connection between the tensioning block and the timing belt.

In some feasible implementations, a hole is provided on the tensioning block 401 along a movement direction of the timing belt 300. In this case, one end of an elastic member 602 is accommodated in the hole of the tensioning block 401. Exemplarily, the elastic member 602 may be a spring.

A tensioning block cover plate 603 is disposed on a side of the support 308 that is away from the first accommodating groove, and the tensioning block cover plate 603 is connected to the other end of the elastic member 602. The tensioning block cover plate 603 is provided with a fixing connector 604 that is fixedly connected to the support 308.

Exemplarily, the tensioning block 401 may be provided with a hole along the movement direction of the timing belt 300, one end of the hole being closed and the other end being open. One end of the elastic member 602 may be disposed in the hole, and the other end of the elastic member 602 may extend out of the hole and be connected to the tensioning block cover plate 603. Optionally, the tensioning block cover plate 603 may be disposed on a side of the support that is away from the first accommodating groove.

The tensioning block cover plate 603 may be provided with a fixing connector 604 that is configured to be fixedly connected to the support 308. The fixing connector 604 may loosen the fixed connection between the tensioning block cover plate 603 and the support 308 during adjustment. After the tensioning block on the timing belt is adjusted by changing the elastic force of the elastic member, the tensioning block cover plate 603 is fixedly connected to the support 308, so as to ensure that the elastic member 602 can stably apply the elastic force to the tensioning block.

Exemplarily, the fixing connector 604 may be a tensioning block cover plate screw, and the support 308 may be provided with a stud 605 for fixing the tensioning block cover plate 603. The tensioning block cover plate screw may be used to connect the tensioning block cover plate 603 to the support. When a screw head of the tensioning block cover plate screw abuts against the tensioning block cover plate 603, there may be a gap between the stud 605 and the tensioning block cover plate 603 due to the elastic force of the elastic member 602. In this case, if the tensioning block cover plate 603 continues to approach the stud 605, the screw head may apply pressure to the tensioning block cover plate 603, and the elastic member 602 may receive an elastic force.

After receiving the elastic force, the elastic member 602 applies a force to the tensioning block 401. Further, the tensioning block 401 receiving the force drives the second timing belt mounting block 501 to move, and thus applies a tensioning force to the other end of the timing belt 300 fixed by the second timing belt mounting block 501 and the tensioning block 401.

Exemplarily, the fixing hole 606 on the tensioning block 401 may be provided on a side surface of the tensioning block 401.

In some feasible implementations, a guide member 607 may be further included. One end of the guide member 607 protrudes from the tensioning block cover plate 603, and the other end of the guide member 607 passes through the axis of the elastic member 602 and abuts against a side of the tensioning block 401 that is away from the tensioning block cover plate 603.

Optionally, the guide member 607 may guide the direction of the tensioning block cover plate 603 and the elastic member 602. The guide member 607 may first pass through the axis of the tensioning block cover plate 603, then pass through the axis of the elastic member 602, and be connected to a closed end of the tensioning block 401. When the tensioning block cover plate screw is screwed into the stud, the tensioning block cover plate 603 may approach the tensioning block 401 along the guide member 607, and the tensioning block cover plate 603 approaching the tensioning block 401 may apply pressure to the elastic member 602. The pressed elastic member 602 may apply an elastic force to the tensioning block 401, so as to drive the tensioning block 401 to move. The moving tensioning block 401 may apply a tensioning force to the timing belt 300, thereby completing the tensioning of the timing belt 300. By implementing the embodiment of the present application, more accurate adjustment can be performed by means of the elastic force of the elastic member, and excessive tension applied to the timing belt to cause the timing belt to be over-tensioned can be avoided.

In some feasible implementations, the adjusting hole may be a waist-shaped hole, or may alternatively be a hole in another shape. This is not limited in the embodiment of the present application.

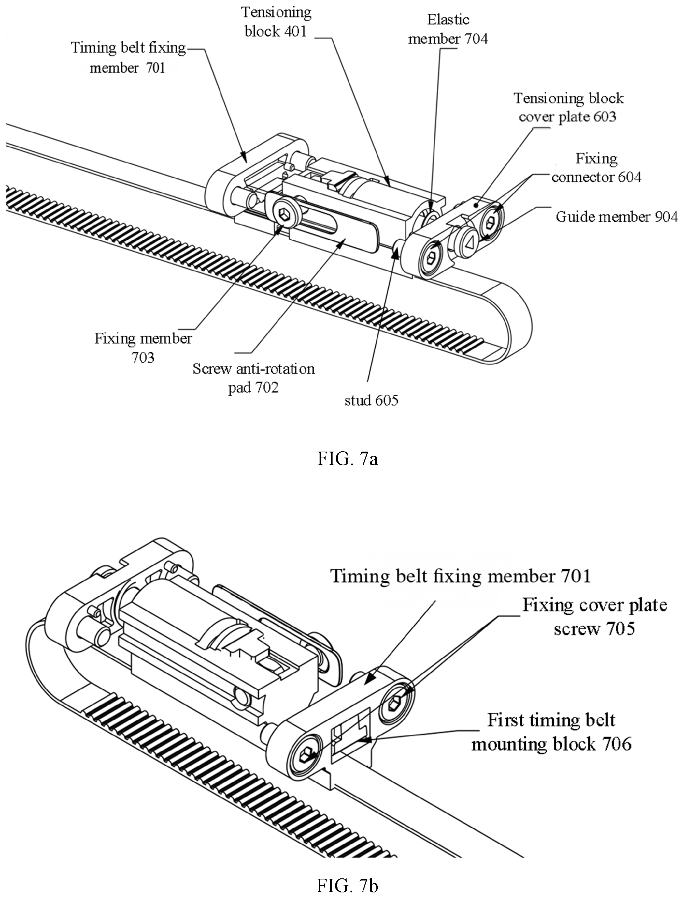

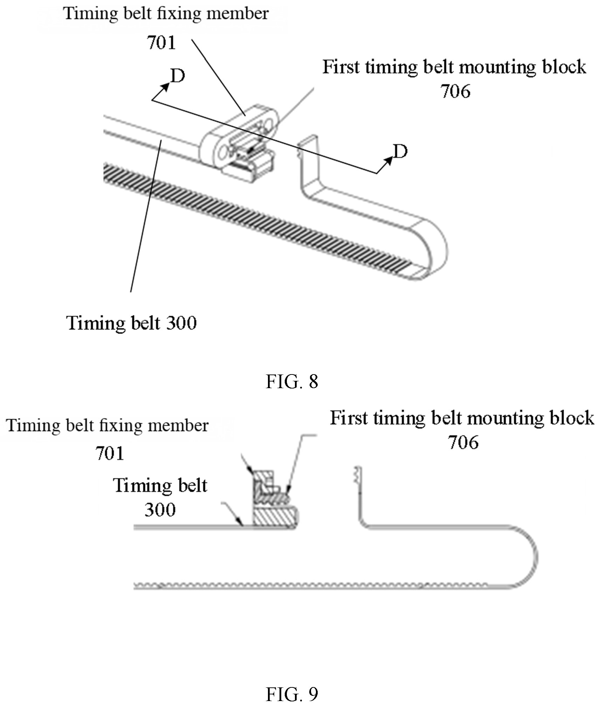

Please refer to FIG. 7a to FIG. 9. FIG. 7a is a partial enlarged view of a position C in FIG. 3b, FIG. 7b is a schematic diagram of the structure of FIG. 7a from another angle, FIG. 8 is another schematic diagram of the structure of a timing belt tensioner according to an embodiment of the present application, and FIG. 9 is a cross-sectional view of the D-D part in FIG. 8.

As shown in FIG. 7a and FIG. 7b, the support 308 includes a timing belt fixing member 701. The timing belt fixing member 701 is provided with the first accommodating groove. The timing belt tensioner further includes a first timing belt mounting block 706.

One end of the timing belt 300 is press-fitted to the first timing belt mounting block 706, and the first timing belt mounting block 706 is accommodated in the first accommodating groove.

Exemplarily, as shown in FIG. 7a, the timing belt fixing member 701 is disposed in the first accommodating groove, and the tensioning block 401 is disposed in the second accommodating groove.

A fixing hole is provided on a side surface of the tensioning block 401, and an adjusting hole may be provided on a screw anti-rotation pad 702 of the support. The fixing hole and the adjusting hole are connected by a fixing member 703. The guide member 904 sequentially passes through the tensioning block cover plate 603 and the elastic member 704, and the tensioning block cover plate 603 is fixed to the stud 605 on the support by the fixing connector 604.

As shown in FIG. 7b, the timing belt fixing member 701 is fixedly connected to the support by a timing belt fixing member screw 705. The first timing belt mounting block 706 fixedly connects one end of the timing belt to the timing belt fixing member 701.

Exemplarily, as shown in FIG. 8 and FIG. 9, when one end of the timing belt 300 is fixedly connected to the first accommodating groove, the one end of the timing belt 300 may be first press-fitted into the first accommodating groove of the timing belt fixing member 701 on the support, and then the first timing belt mounting block 706 is inserted into the first accommodating groove. The one end of the timing belt 300 is fixed to the first accommodating groove due to compressing of the first timing belt mounting block 706. The thickness of the first timing belt mounting block may be consistent with, or may alternatively be set to be less than the diameter of the opening of the first accommodating groove, but the sum of the thickness of the first timing belt mounting block and the thickness of the timing belt is greater than the diameter of the opening of the first accommodating groove, so as to ensure that the timing belt can be stably fixed in the first accommodating groove. By implementing the embodiment of the present application, it can be ensured that one end of the timing belt is stably fixed to the timing belt fixing member; moreover, when the one end of the timing belt needs to be adjusted, the first timing belt mounting block may alternatively be taken out to separate the timing belt from the timing belt fixing member, thereby improving structural flexibility.

Optionally, the timing belt fixing member is fixed on a side of the support facing the drive wheel.

The first accommodating groove of the support 308 may be fixed to one end of the timing belt 300, and the tensioning block 401 in the second accommodating groove of the support 308 may be fixedly connected to the other end of the timing belt 300. Because one end of the timing belt 300 is fixed to the support 308, the position of the other end of the timing belt 300 can be adjusted by adjusting the position of the tensioning block 401, thereby applying a tensioning force to the timing belt 300 and thus realizing the tensioning of the timing belt 300.

The first accommodating groove in the support 308 may be on a side of the support 308 that is close to the drive wheel 304, and one end of the timing belt 300 is fixed to the first accommodating groove. Certainly, the first accommodating groove in the support may alternatively be on a side of the support that is close to the driven wheel, and the second accommodating groove may be on a side of the support that is close to the drive wheel. This is not limited in the embodiments of the present application. In some feasible implementations, the support is connected to the print head of the 3D printer. By implementing the embodiments of the present application, the tensioning of the timing belt corresponding to the print head can be realized based on a smaller space occupation.

In some feasible implementations, the support is connected to a heatbed of a 3D printer. By implementing the embodiments of the present application, the tensioning of the timing belt corresponding to the heatbed can be realized based on a smaller space occupation.

In some feasible implementations, the 3D printer may include both a heatbed and a print head, and the support may include a first support and a second support.

The heatbed may be connected to the first support, and the print head may be connected to the second support. Therefore, the heatbed may move under the drive of the first support, and the print head may also move under the drive of the second support.

It should be noted that the terms "first" and "second" are used for descriptive purposes only and are not to be construed as indicating or implying relative importance.

## Claims

1. A timing belt tensioner for a 3D printer, wherein the 3D printer comprises a support and a timing belt, and one end of the timing belt is fixed on a side of the support; and the timing belt tensioner comprises:
a tensioning block slidably connected to the support and fixedly connected to the other end of the timing belt; and
a fixing assembly disposed within a sliding range of the tensioning block, so as to fix the tensioning block to the support at any position within the sliding range.

2. The timing belt tensioner according to claim 1, wherein the fixing assembly comprises a fixing hole and a fixing member connected to the fixing hole, and the fixing hole is provided on the tensioning block or on the support.

3. The timing belt tensioner according to claim 2, wherein the fixing hole is provided on the tensioning block; and
the fixing assembly further comprises an adjusting hole, wherein the adjusting hole is located on the support and is provided corresponding to the fixing hole on the tensioning block; and
a fixing member, wherein the fixing member is connected to the fixing hole of the tensioning block within an adjustment range of the adjusting hole, so as to fixedly connect the tensioning block to the support at any position within the sliding range.

4. The timing belt tensioner according to claim 1, wherein the support comprises a timing belt fixing member, and the timing belt fixing member is provided with a first accommodating groove; the timing belt tensioner further comprises a first timing belt mounting block; and
fixing, by the first accommodating groove, one end of the timing belt includes:
press-fitting one end of the timing belt to the first timing belt mounting block, and accommodating the first timing belt mounting block in the first accommodating groove.

5. The timing belt tensioner according to claim 4, wherein
the timing belt is wound around a drive wheel of the 3D printer, and the timing belt fixing member is fixed on a side of the support facing the drive wheel.

6. The timing belt tensioner according to any one of claims 1 to 5, wherein the timing belt tensioner further comprises a second timing belt mounting block penetrating a slot provided in the tensioning block; and
fixedly connecting the tensioning block to the other end of the timing belt includes:
enabling the other end of the timing belt to penetrate the tensioning block via the slot, and accommodating the second timing belt mounting block in the slot.

7. The timing belt tensioner according to any one of claims 1 to 6, further comprising:
an elastic member, wherein one end of the elastic member is connected to the tensioning block; and
a tensioning block cover plate, wherein the tensioning block cover plate is connected to the other end of the elastic member, and the tensioning block cover plate is provided with a fixing connector that is fixedly connected to the support.

8. The timing belt tensioner according to claim 7, further comprising:
a guide member, wherein one end of the guide member protrudes from the tensioning block cover plate, and the other end of the guide member passes through an axis of the elastic member and abuts against a side of the tensioning block that is away from the tensioning block cover plate.

9. The timing belt tensioner according to claim 3, wherein the adjusting hole is a waist-shaped hole.

10. The timing belt tensioner according to any one of claims 1 to 9, wherein the support is connected to a print head of the 3D printer.

11. The timing belt tensioner according to any one of claims 1 to 9, wherein the support is connected to a heatbed of the 3D printer.

12. A 3D printer, comprising: a timing belt and the timing belt tensioner according to any one of claims 1 to 11.

13. A 3D printing system, comprising: a feeding device and the 3D printer according to claim 12, wherein the feeding device is connected to the 3D printer.
